# EUROPÄISCHE PATENTSCHRIFT

(11) **EP 1 193 115 B1**
(45) Veröffentlichungstag und Bekanntmachung des Hinweises auf die Patenterteilung: **19.03.2008**
(21) Anmeldenummer: 01116368.0
(22) Anmeldetag: 06.07.2001
(51) Int. Cl.: B60N 2/44

(54) **Sitz mit Seitenstützen für Fahrzeuge**
Seat with lateral supports for vehicles
Siège à supports latéraux pour véhicules

(30) Priorität: 12.09.2000 DE 10044963
(43) Veröffentlichungstag der Anmeldung: 03.04.2002
(73) Patentinhaber: Dr.Ing. h.c. F. Porsche Aktiengesellschaft, 70435 Stuttgart (DE)
(72) Erfinder: Achleitner, August, 71263 Weil der Stadt (DE); Mc Cann, Robert, California 92657 (US)

(56) Entgegenhaltungen:
- DE-A- 3 417 616
- FR-A- 2 768 092
- US-A- 5 370 446
- US-A- 6 045 183
- PATENT ABSTRACTS OF JAPAN vol. 008, no. 080 (M-289), 12. April 1984 (1984-04-12) & JP 58 224818 A (NIHON HATSUJIYOU KK), 27. Dezember 1983 (1983-12-27)

## Beschreibung

Die Erfindung bezieht sich auf einen Sitz für Fahrzeuge, Flugzeuge oder dergl. nach dem Oberbegriff des Patentanspruchs 1.

Von Sitzen, eingebaut in Fahrzeuge oder Flugzeuge, die häufig wechselnde Kurven oder hohe Kurvengeschwindigkeiten ausgesetzt sind, wird erwartet, dass sie den Passagieren, die auf ihnen transportiert werden, guten Halt bieten.

Aus der DE 34 17 616 C2 geht ein Fahrzeugsitz hervor, der ein Sitzteil und ein Lehnenteil besitzt, die mit feststehenden Sitzteilstützen bzw. Lehnenteilstützen versehen sind. Die Sitzteilstützen und die Lehnenteilstützen ragen über Sitzteilbezugsflächen bzw. Lehnenteilbezugsflächen hinaus, was die Platzeinnahme der Passagiere, die im wesentlichen quer zum Fahrzeugsitz erfolgt, erschwert.

Die FR 2 768 092 A1 beschreibt einen Sitz für ein Automobil entsprechend dem Oberbegriff des Auspruchs 1 mit einem Sitzkissen und einer Rückenlehne, wobei das Sitzkissen einen zentralen Teil und zwei seitlich angeordnete Schwingen aufweist, und wobei die Rückenlehne ebenfalls zwei seitliche Schwingen aufweist um den seitlichen Halt eines Insassen zu unterstützen.

Es ist daher Aufgabe der Erfindung an einem Sitz für Fahrzeuge, Flugzeuge oder dergl. solche Vorkehrungen zu treffen, dass der jeweilige ihn nutzende Passagier bei Querbeschleunigengen vorbildlich abgestützt ist und besagter Passagier bequem diesen Sitz einnehmen kann.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass dank der einstellbaren Sitzteilstützen und Lehnenteilstützen des Sitzteils bzw. Lehnenteils ein damit ausgestatteter Sitz dem jeweiligen Passagier nicht nur guten seitlichen Halt bietet, sondern diese Stützen in eine Stellung bewegbar sind, in der die Platzeinnahme für diesen Passagier einfach ist. Die Sitzteilstützen und Lehnenteilstützen können so gestaltet werden, dass sie an unterschiedliche Körpergrößen von Passagieren anpassbar sind. Die Verstellbarkeit der Lehnenteilstützen ist leicht realisierbar, wenn letztere über in Längsrichtung des Lehnenteils verlaufende Schwenkachsen verschwenkbar sind und darüber hinaus an in Längsrichtung dieser Schwenkachsen beabstandet angeordneten Scharnieren gelagert sind. Die Einschnürungen im Lehnenteil und die Ausnehmungen in den Lehnenstützen tragen dazu bei, dass eine gezielte Beweglichkeit der Lehnenteilstützen um die Schwenkachsen sichergestellt ist. Vorteilhaft ist auch die Schwenkachsen der Sitzteilstützen horizontal auszurichten und mit relativ geringem Abstand zu einer vorderen quer verlaufenden Begrenzung des Sitzteils anzuordnen. Schließlich trägt die Anordnung des Verstellhebels zur Sitzlängsverstellung im Sitzteil zur Konstruktionsvereinfachung und ergonomischen Bedienung des Sitzes bei.

In der Zeichnung wird ein Ausführungsbeispiel der Erfindung gezeigt das nachstehend näher beschrieben ist.

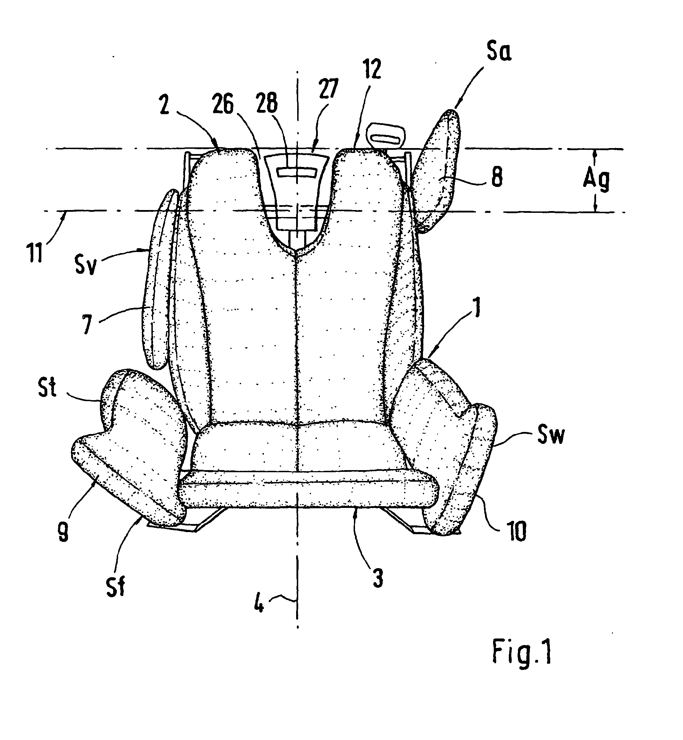

Es zeigen
- Fig.1: eine Ansicht schräg von oben und in Fahrtrichtung auf den erfindungsgemäßen Sitz,

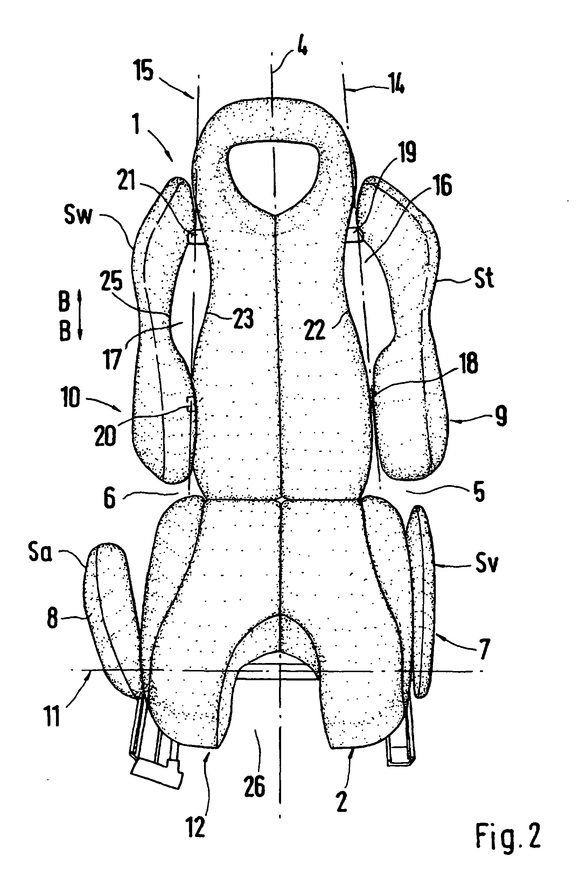

- Fig. 2: eine Ansicht schräg von oben und entgegen der Fahrtrichtung auf besagten Sitz,

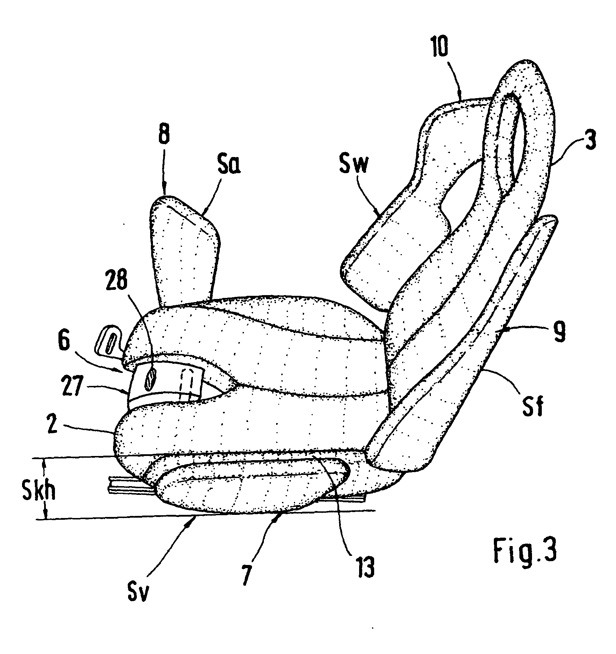

- Fig. 3: eine Ansicht schräg von oben und quer zur Fahrtrichtung auf den Sitz nach Fig.1.

Ein Sitz 1, der sich zum Einbau in Fahrzeuge, Flugzeuge oder dergl. eignet, ist an einem entsprechenden Boden eines Aufbaus - nicht dargestellt - längsverschiebbar gelagert. Der Sitz 1 wird gebildet durch ein Sitzteil 2 und ein Lehnenteil 3, die im Winkel zueinander angeordnet sind. Beiderseits einer Mittellängsebene 4 sind an den Längsseiten 5,6 des Sitzes 1 bzw. des Sitzteils 2 und des Lehnenteils 3 Sitzteilstützen 7,8 bzw. Lehnenteilstützen 9,10 vorgesehen. Die Sitzteilstützen 7,8 und die Lehnenteilstützen 9,10 verleihen einem den Sitz nutzende Passagier seitlichen Halt z.B. beim Durchfahren von Kurven mit wechselnden Richtungen und entsprechend hohen Querbeschleunigungswerten. Die Sitzteilstützen 7,8 und die Lehnenteilstützen 9,10 sind einstellbar ausgeführt, und zwar unabhängig voneinander. Hierzu sind die Sitzteilstützen 7,8 über eine quer zum Sitz 1 verlaufende Schwenkachse 11 verstellbar ausgeführt, dergestalt, dass die Sitzteilstützen 7,8 aus einer ersten versenkten Stellung Sv in eine zweite ausgefahrene Stellung Sa und vice versa bewegbar sind. Die Schwenkachse 11 ist mit relativ geringem Abstand zu einer vorderen Begrenzung 12 des Sitzes 1 bzw. des Sitzteils 2 angeordnet und etwa horizontal ausgerichtet. Die Sitzteilstützen 7,8, die plattenartig ausgeführt sind, liegen in der versenkten Stellung Sv innerhalb der Sitzkissenhöhe Skh des Sitzteiles 2 d.h. sie ragen so eingestellt nicht über eine Sitzkissenbezugsfläche 13 des besagten Sitzteils hinaus.

Die Lehnenteilstützen 9,10 sind mittels Schwenkachsen 14,15 verstellbar, die in Längsrichtung B-B des Lehnenteils 3, und zwar entlang von dessen Längsseiten 16,17 verlaufen. Hierzu sind die Lehnenstützen 9,10 an Scharnieren 18,19 und 20,21 gelagert, die beabstandet zueinander entlang der Schwenkachsen 14,15 angeordnet sind. Die Lehnenteilstützen 9,10 lassen sich zwischen einer ersten flachen Stellung Sf und einer zweiten winkeligen Stellung Sw verstellen.

Das Lehnenteil 3 weist an den Längsseiten 16,17 zwischen den Scharniere 18,19 und 20, 21 Einschnürungen 22,23 auf, die von den Schwenkachsen 14,15 weggeführt sind. Und die Lehnenteilstützen 9,10 sind zwischen den Scharnieren 18,19 und 20,21 mit Ausnehmungen 24,25 versehen, die gegenüber den Längsseiten 16,17 des Lehnenteils 3 konvexe Verläufe besitzen.

Die Sitzteilstützen 7,8 und Lehnenteilstützen 9.10 können mit geeigneten Einrichtungen manuell verstellt werden. Möglich ist aber auch, sie elektrisch, hydraulisch oder pneumatisch zu verstellen.

Das Sitzteil 2 ist in der Mittellängsebene 4 zwischen den Sitzteilstützen 7,8 mit einer Ausnehmung 26 versehen, die zur vorderen Begrenzung 12 hin offen ist. Diese Ausnehmung 26 dient zur Aufnahme eines Verstellhebels 27 mit der z.B. die Längsverstellung des Sitzes im Fahrgastraum bewerkstelligbar ist. Der Verstellhebel 26 ist mit einer Handhabe 28 in vollem Umfang versenkt in der Ausnehmung 26 untergebracht.

## Patentansprüche

1. Sitz für Fahrzeuge, Flugzeuge oder dergl., umfassend ein Sitzteil und ein Lehnenteil, wobei beiderseits einer Mittellängsebene des Sitzes an Längsseiten des Sitzteils Sitzteilstützen und an Längsseiten des Lehnenteils Lehnenteilstützen angeordnet sind, welche Sitzteilstützen und Lehnenteilstützen einem den Sitz nutzenden Passagier seitlichen Halt verleihen, wobei sowohl die Sitzteilstützen (7, 8) wie auch die Lehnenteilstützen (9, 10) des Sitzes (1) einstellbar ausgeführt sind, **dadurch gekennzeichnet, dass** die Sitzteilstützen (7, 8) über eine quer zum Sitz (1) verlaufende, vorzugsweise etwa horizontal ausgerichtete Schwenkachse (11) einstellbar sind, wobei die Schwenkachse (11) mit relativ geringem Abstand (Ag) zu einer vorderen quer verlaufenden Begrenzung (12) des Sitzteils (2) angeordnet ist, und die Sitzteilstützen (7, 8) von einer ersten versenkten Stellung (Sv) in eine zweite ausgefahrene Stellung (Sa) und vice versa verstellbar sind, wobei die Sitzteilstützen (7, 8) in der versenkten Stellung (Sv) innerhalb einer Sitzkissenhöhe (Skh) des Sitzteils (2) liegen.

2. Sitz nach Anspruch 1, **dadurch gekennzeichnet, dass** die Lehnenteilstützen (9, 10) sich über in Längsrichtung (B-B) des Lehnenteils (3) erstreckende Schwenkachsen (14, 15) verstellbar sind.

3. Sitz nach Anspruch 2, **dadurch gekennzeichnet, dass** die Lehnenteilstützen (9, 10) an in Längsrichtung der Schwenkachsen (14, 15) beabstandeten Scharnieren (18, 19 und 20, 21) gelagert sind.

4. Sitz nach Anspruch 3, **dadurch gekennzeichnet, dass** zwischen den Scharnieren (18, 19) das Lehnenteil (3) an den Längsseiten zur Mittellängsebene (4) des Sitzes (1) verlaufende Einschnürungen (22,23) aufweist.

5. Sitz nach Anspruch 3, **dadurch gekennzeichnet, dass** zwischen den Scharnieren (18, 19) die Lehnenteilstützen (9, 10) vom Lehnenteil (3) weggeführte Ausnehmungen (24, 25) aufweisen.

6. Sitz der Setz (1) einem zu seiner Längsverstellung dienenden Verstellhebel (27) aufweist und nach Anspruch 1, **dadurch gekennzeichnet, dass** im Sitzteil (2) zwischen Sitzteilstützen (7, 8) ein zur vorderen Begrenzung (12) hin offene Ausnehmung (26) zur Aufnahme des Verstellhebels (27) vorgesehen ist.

7. Sitz nach Anspruch 6, **dadurch gekennzeichnet, dass** der Verstellhebel (27) versenkt in die Ausnehmung (26) eingesetzt ist.

## Claims

1. Seat for vehicles, aircraft or the like, comprising a seat part and a backrest part, wherein seat-part supports are arranged on both sides of a longitudinal centre plane of the seat on longitudinal sides of the seat part, and backrest-part supports are arranged on longitudinal sides of the backrest part, which seat-part supports and backrest-part supports provide a passenger using the seat with lateral support, and wherein the seat-part supports (7, 8) and the backrest-part supports (9, 10) of the seat (1) are of adjustable design, **characterized in that** the seat-part supports (7, 8) can be adjusted via a pivot axis (11) which runs transversely with respect to the seat
(1) and is preferably oriented approximately horizontally, the pivot axis (11) being arranged at a relatively small distance (Ag) from a front, transversely running boundary (12) of the seat part (2), and the seat-part supports (7, 8) can be adjusted from a first recessed position (Sv) into a second extended position (Sa) and vice versa, with the seat-part supports (7, 8) being located in the recessed position (Sv) within a seat-cushion height (Skh) of the seat part (2).

2. Seat according to Claim 1, **characterized in that** the backrest-part supports (9, 10) can be adjusted via pivot axes (14, 15) extending in the longitudinal direction (B-B) of the backrest part (3).

3. Seat according to Claim 2, **characterized in that** the backrest-part supports (9, 10) are mounted on hinges (18, 19 and 20, 21) spaced apart in the longitudinal direction of the pivot axes (14, 15).

4. Seat according to Claim 3, **characterized in that**, between the hinges (18, 19), the backrest part (3) has contractions (22, 23) running on the longitudinal sides with respect to the longitudinal centre plane (4) of the seat (1).

5. Seat according to Claim 3, **characterized in that**, between the hinges (18, 19), the backrest-part supports (9, 10) have recesses (24, 25) guided away from the backrest part (3).

6. Seat according to Claim 1, **characterized in that** the seat (1) has an adjustment lever (27) serving for its longitudinal adjustment, and a recess (26), which is open towards the front boundary (12), for accommodating the adjustment lever (27) is provided in the seat part (2) between the seat-part supports (7, 8).

7. Seat according to Claim 6, **characterized in that** the adjustment lever (27) is inserted into the recess (26) in a recessed manner.

## Revendications

1. Siège pour véhicules automobiles, avions ou analogues, comprenant une partie d'assise et une partie de dossier, sachant que, de part et d'autre d'un plan médian longitudinal du siège, des supports d'assise sont disposés sur des côtés longitudinaux de la partie d'assise et des supports de dossier sur des côtés longitudinaux de la partie de dossier, lesdits supports d'assise et de dossier conférant un maintien latéral à un passager utilisant le siège, sachant que tant les supports d'assise (7, 8) que les supports de dossier (9, 10) du siège (1) sont réalisés réglables, **caractérisé en ce que** les supports d'assise (7, 8) sont réglables autour d'un axe de pivotement (11) s'étendant transversalement par rapport au siège (1) et de préférence orienté approximativement horizontalement, sachant que l'axe de pivotement (11) est disposé à une relativement faible distance (Ag) d'une délimitation avant (12), s'étendant transversalement, de la partie d'assise (2), et les supports d'assise (7, 8) peuvent être déplacés d'une première position escamotée (Sv) dans une deuxième position déployée (Sa) et vice versa, sachant que les supports d'assise (7, 8) se situent, dans la position escamotée (Sv), à l'intérieur d'une hauteur de coussin (Skh) de la partie d'assise (2).

2. Siège selon la revendication 1, **caractérisé en ce que** les supports de dossier (9, 10) sont réglables autour d'axes de pivotement (14, 15) s'étendant dans la direction longitudinale (B-B) de la partie de dossier (3).

3. Siège selon la revendication 2, **caractérisé en ce que** les supports de dossier (9, 10) sont montés sur des charnières (18, 19 et 20, 21) mutuellement distantes dans la direction longitudinale des axes de pivotement (14, 15).

4. Siège selon la revendication 3, **caractérisé en ce que** la partie de dossier (3) présente entre les charnières (18, 19), sur les côtés longitudinaux, des rétrécissements (22, 23) s'étendant vers le plan médian longitudinal (4) du siège (1).

5. Siège selon la revendication 3, **caractérisé en ce que** les supports de dossier (9, 10) présentent, entre les charnières (18, 19), des évidements (24, 25) s'éloignant de la partie de dossier (3).

6. Siège selon la revendication 1, **caractérisé en ce que** le siège (1) présente un levier de réglage (27) servant à son réglage longitudinal, et un évidement (26) ouvert vers la délimitation avant (12) est prévu entre les supports d'assise (7, 8) dans la partie d'assise (2) pour recevoir le levier de réglage (27).

7. Siège selon la revendication 6, **caractérisé en ce que** le levier de réglage (27) est installé escamoté dans l'évidement (26).
